# EUROPEAN PATENT SPECIFICATION

(11) **EP 3 453 202 B1**
(45) Date of publication and mention of the grant of the patent: **29.04.2020**
(21) Application number: 17798670.0
(22) Date of filing: 11.05.2017
(51) Int. Cl.: H04W 36/00, H04L 5/00, H04L 1/18, H04W 76/10, H04W 72/04, H04L 1/00, H04W 16/28

(54) **METHOD OF OPERATING A CELLULAR NETWORK INCLUDING HIGH FREQUENCY BURST TRANSMISSION**
VERFAHREN ZUM BETRIEB EINES MOBILFUNKNETZES MIT HOCHFREQUENZ-BURSTÜBERTRAGUNG
PROCÉDÉ D'EXPLOITATION D'UN RÉSEAU CELLULAIRE INCLUANT UNE ÉMISSION PAR SALVES À HAUTE FRÉQUENCE

(30) Priority: 18.05.2016 US 201615157789
(43) Date of publication of application: 13.03.2019
(73) Proprietor: Huawei Technologies Co., Ltd., Longgang District Shenzhen, Guangdong 518129 (CN)
(72) Inventor: LIU, Bin, San Diego CA 92127 (US); STIRLING-GALLACHER, Richard, Shenzhen, Guangdong 518129 (CN); TENNY, Nathan Edward, Poway CA 92064 (US); ZHANG, Lili, Beijing 100089 (CN)
(74) Representative: Gill Jennings & Every LLP
(86) International application number: PCT/CN2017/084005
(87) International publication number: WO 2017/198107

(56) References cited:
- EP-A1- 2 861 014
- WO-A1-2015/088498
- WO-A1-2015/115376
- WO-A1-2015/115376
- WO-A1-2015/115376
- CN-A- 103 929 226
- US-A1- 2015 270 932
- US-A1- 2015 373 601

## Description

### TECHNICAL FIELD

The present disclosure relates generally to a system and method wireless communication, and, in particular aspects, to a system and method for communicating in a burst mode using high frequency signals.

### BACKGROUND

Providing enough wireless data capacity to meet demand is an ongoing challenge. One area under consideration in next generation cellular communication standards (5G) for providing additional bandwidth is to use high frequencies (i.e. greater than 6GHz) such as millimeter wave frequencies. Wireless signals communicated using carrier frequencies between 30 Gigahertz (GHz) and 300 GHz are commonly referred to as millimeter Wave (mmWave) signals because the wavelength of a 30 GHz is about 10 mm and the wavelength decreases with frequencies higher than 30 GHz. Therefore, wavelengths measured in single digits of millimeters begin at approximately 30 GHz. There are a variety of telecommunication standards that define protocols for communicating using high frequencies. However, due to the attenuation characteristics of wireless signals exceeding 30 GHz, mmWave signals tend to exhibit high, oftentimes unacceptable, packet loss rates when transmitted over relatively long distances (e.g., distances exceeding one kilometer), and consequently have been used primarily for short-range communications.

To combat this limitation, several techniques have been developed. In particular, multiple-input and multiple-output, or MIMO antenna arrays with sophisticated beamforming techniques have been successfully demonstrated. However, beamforming produces a highly concentrated beam to a specific spot. If the receiving user device is mobile, any movement by the user device can disrupt the connection. In addition, high frequency connections are relatively fragile. They require a clear line of sight and can be easily disrupted by noise or interference. Thus, the link is often disrupted. Each disruption requires reacquiring the link, which creates a large amount of overhead just to keep the link active. Nonetheless, high frequency signals are attractive because of their high data carrying capacity. Therefore, there is a need for techniques to overcome the limitations of high frequency transmission in order to take advantage of its high capacity.

WO2015/115376 relates to user device, base station, and communication method.

### SUMMARY

Various aspects of the present disclosure have been defined in the independent claims. Further technical features of each of these aspects have been defined in the respective dependent claims.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 is a diagram of a high frequency network;
Figure 2 is a process diagram showing communication between elements of the high frequency network;
Figures 3A and 3B are process diagrams showing communication between elements of the high frequency network;
Figure 4 is a partial diagram of the high frequency network illustrating a beam selection process;
Figure 5 is a timing diagram for the transmission of the beams;
Figure 6 is a partial diagram of the high frequency network illustrating beam selection;
Figure 7A-7C are timing diagrams of beam transmission;
Figure 8 is a process diagram showing communication between elements of the high frequency network;
Figures 9A and 9B are process diagrams showing communication between elements of the high frequency network;
Figure 10 is a block diagram of an aspect processing system; and
Figure 11 is a block diagram of a transceiver.

### DETAILED DESCRIPTION OF ILLUSTRATIVE EMBODIMENTS

The structure, manufacture and use of the preferred aspects are discussed in detail below. It should be appreciated, however, that the present disclosure provides many applicable inventive concepts that can be embodied in a wide variety of specific contexts. The specific aspects discussed are merely illustrative of specific ways to make and use the aspects, and do not limit the scope of the aspects.

Embodiments described herein enable the use of a heterogeneous network that takes advantage of the large data capacity of high frequency signals while circumventing the limitations of those signals, such as severe path loss, link fragility, etc. A macro cell area includes one or more high frequency transmission points (TPs) under the control of a low frequency node, such as an enhanced node B (eNB), which serves as a macro cell manager. When a data transmission arrives at the eNB that is directed to a user equipment (UE) in the macro cell area, the eNB transmits a paging signal along with a signal indicating that the macro area includes high frequency TPs. If the UE is high frequency capable, the eNB sends instructions to TPs near the UE to send reference signals. The reference signals should be beamformed to overcome the severe path loss in high frequency transmission. UE-specific reference signal is sent in each beam and each beam is identified with different reference signal. The UE then determines a channel quality indicator (CQI) for each beam. In one aspect, the UE indicates the best detected beam from the TPs to the eNB. With the help of the eNB, the UE and TP then initiate negotiation of a link using the selected beam. In another aspect, the UE immediately begins the process of establishing a link directly with the selected TP when an acceptable beam is detected. While the beam selection process is being performed, the downlink data for the UE is transmitted to the TPs via a fronthaul connection from a macro eNB. Once the link between the UE and selected TP is established, the downlink (DL) transmission can be completed very fast due to the high bandwidth of the high frequency signal. This burst type transmission does not need to maintain the link for long period. Thus, it can circumvent the fragility issue in using high frequency links.

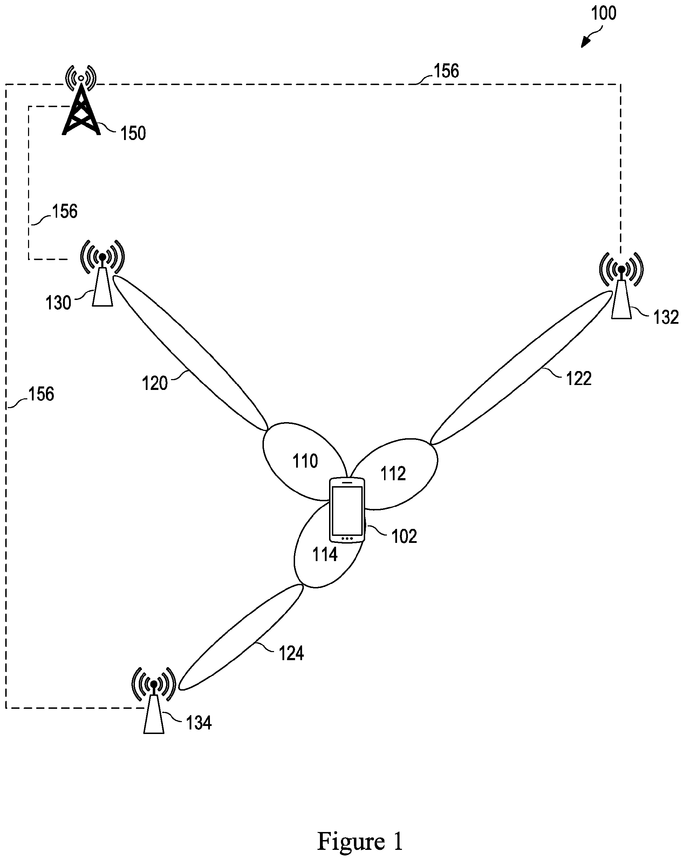

Figure 1 is a diagram of a high frequency network 100, where a macro eNB 150 works in low frequency band to ensure the coverage, and three TPs, 130, 132 and 134, are deployed in high frequency band to enhance the system capacity. The high frequency TPs are under the control of macro eNB 150. In this example, a UE 102 forms three receive beams 110, 112 and 114 and receives 3 downlink beams 120, 122 and 124 from TP 130, 132 and 134 respectively. The number of beams, a UE can form simultaneously, depends on the capabilities of UE 102.

In the area under the coverage of macro eNB 150 (i.e. the macro cell) are several high frequency TPs, such as TPs 130, 132 and 134. The number of TPs within the coverage area of a macro eNB varies depending on the circumstances within the area under coverage of the macro eNB. For example, an area that has several buildings will typically have more TPs than a clear area of similar size, because high frequency signals require a clear line-of-sight. That is, any significant object between the TP and the UE will probably prevent transmission using high frequency signals. Therefore, more TPs are required to avoid these obstructions. Each TP may be connected to macro eNB 150 by connections of various types, e.g. fronthaul connections 156. Fronthaul connections 156 may be transported fiber optic connections, fixed wireless connections or any of the known technologies used for providing high speed fronthaul connections.

In an example configuration, when a high frequency capable UE 102 is in a macro cell, three operation modes are proposed with regard to mmWave communications:
- mmWave IDLE: no connection to mmWave TP. In this status, the UE turns off its mmWave RF front end to save power;
- mmWave Burst: temporary connection to mmWave TPs for burst data transmission; or
- mmWave Connected: UE maintains continuous connection to mmWave TPs for continuous large volume data transmission, such as video streaming, etc. This mode is similar to connected mode in LTE.

These conditions with regard to mmWave communications may be realized as states of a protocol, e.g. a control plane protocol such as the RRC terminated between the UE and the involved TP. The UE may be constrained to operate in the mmWave_Burst or mmWave_Connected modes only under the control of macro eNB 150, e.g., when the UE is connected to the macro eNB 150 using the macro network and the macro eNB has indicated that high frequency TPs are available in its macro cell. In addition, the high frequency transceiver of the UE should be on when it is within high frequency coverage and has an operation to perform towards the high frequency TPs, e.g., a large amount of data to upload or download. If the UE is in a macro cell with high frequency capability, it can turn on its high frequency transceiver and set up a high frequency link with a high frequency TP. Otherwise, the high frequency transceiver in the UE should be turned off to conserve power.

In one aspect, the availability of high frequency communication is controlled by the network through macro eNB 150 based on various criteria such as actual service requirements and the cell traffic loading situation. In an aspect, the high frequency TPs function as hotspots to offload data traffic from the macro layer. The behavior of the TPs (i.e. when and under what conditions the TPs will connect) is controlled by the network. In one aspect, the macro eNB 150 turns on/off one or more of the high frequency TPs (130, 132, 134) based on traffic load in the macro layer. Turning the high frequency TPs off when not needed minimizes power use and avoids any interference that may be caused by the TP.

When serving multiple UEs, in one aspect, a high frequency TP uses time division multiplexing rather than frequency division multiplexing between different UEs in both uplink and downlink. Thus, during a particular burst transmission involving a particular UE in a particular time slot, the TP has a dedicated high frequency link for that UE. This allows the UE to finish uplink or downlink transmission as quickly as possible. Using a dedicated link provides several benefits. For example, the random access procedure between a UE and a high frequency TP can be simplified because there is less need to handle conflicts and identify the source of a random transmission. The physical downlink control channel (PDCCH) can also be simplified due to all physical resources being allocated to one UE.

As noted above, in mmWave mode, the UE may link to a TP in mmWave_Burst mode or mmWave_Connected mode. The mode is decided by macro eNB with measurement and context information from UE when possible. The mode may be decided based on characteristics of the data traffic. For sporadic data traffic, mmWave_Burst mode is used because there is no need for a continuous connection with the overhead necessary to maintain a beam-formed high frequency link. For continuous data traffic (e.g. video streaming), mmWave_Connected mode is preferred. The mode may also be based on channel statistics (i.e. the mode could be semi-static based on cell location or time). For a channel with high dynamics (e.g., frequent beam switch or blockage), mmWave_Burst mode is preferred to avoid the overhead of beam switching and reacquisition. For a relatively stable environment, mmWave_Connected mode is preferred. However, the UE or the network may need to turn on beam tracking to maintain the high frequency link for mmWave_Connected mode. The transmission mode selection is thus a tradeoff between beam detection and beam tracking. In addition, with the high end of high frequency band (>30GHz), mmWave_Burst mode is more favorable than with lower high frequency frequencies because link robustness is even more of an issue because of the greater path loss and narrower beam width relative to lower high frequency frequencies. Different criteria for selecting mmWave_Connected vs. mmWave_Burst communication modes may be employed in different scenarios, taking some or all of the above aspects into account, and with the decision on configuration taken by the UE, by a network node such as the macro eNB or the high frequency TP, or by UE and network in collaboration.

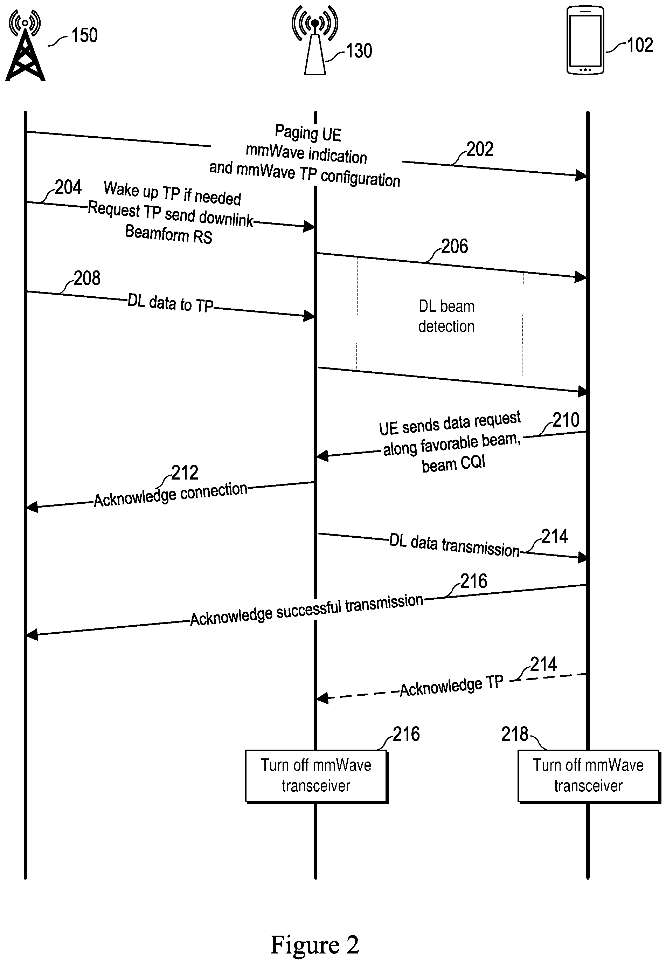

Figure 2 is a diagram of an aspect process for creating a downlink (DL) burst transmission using a high frequency TP. It is assumed that DL data is sent to macro eNB 150 and is ready to be transmitted to UE 102 and that UE 102 is in such a position that a link may be established between UE 102 and TP 130. In step 202, macro eNB 150 sends a paging message using the low frequency connection (e.g. LTE using macro eNB 150). The page indicates that a DL data is available for UE 102 and provides an indication that high frequency connections are available. In addition, the page includes configuration information regarding the configuration of the high frequency TPs under control of macro eNB 150. As part of the paging information, macro eNB 150 indicates to UE 102 whether data will be routed through a high frequency TP or directly from macro eNB through a low frequency (e.g. LTE) connection. If a high frequency TP is not available, UE 102 follows macro layer paging procedures (e.g., random access in response to a paging message, followed by setting up a radio resource control (RRC) connection) and data will be delivered through macro eNB.

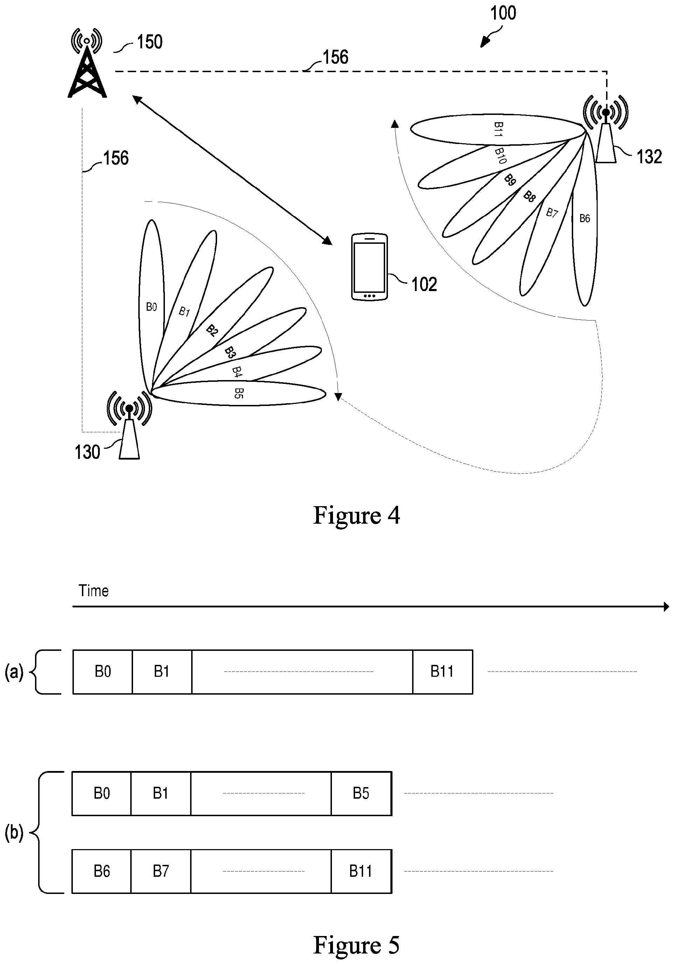

In step 204, macro eNB 150 sends a message to wake up TP 130, if needed, and sends a request to send beamformed reference signal (RS) (described below with regard to Figure 4). The message in step 204 may be sent over a network interface, e.g., a fronthaul interface or a base-station-to-base-station interface such as the LTE X2 interface. In step 206, TP 103 begins the process of sending a plurality of beams with reference signals for DL beam detection. While step 206 is occurring, macro eNB 150 sends the DL data to TP 130 in step 208. In an alternative aspect, macro eNB 150 sends the data to TP 130 after TP 130 acknowledges the high frequency link connection. However, this alternative process introduces more latency. In step 210, UE 102 sends a request to transmit the DL data using the most favorable beam. The request includes the channel quality indicator (CQI) of the most favorable beam to allow TP 130 to determine an appropriate transmission power and modulation and coding scheme (MCS). TP 130 then acknowledges to macro eNB 150 the connection in step 212. TP 130 then sends the DL transmission in step 214. Because TP 130 operates using high frequency signals, and thus has a very large bandwidth, the DL can be completed, even for large amounts of data, in a very short time (e.g. tenths of a millisecond). In step 216, the UE 102 acknowledges successful transmission (or errors, as discussed below) to macro eNB 150. In an aspect, UE 102 also (or in the alternative) acknowledges the transmission to TP 130. In step 216, TP 130 turns off its high frequency transceiver and in step 218, UE 102 turns off its high frequency transceiver. If the high frequency link failed before the transmission was completed, macro eNB 150 can decide whether to take over the "retransmission" in the macro layer or initiate a new high frequency burst transmission (potentially using a different TP, e.g. by repeating the same process starting from step 202).

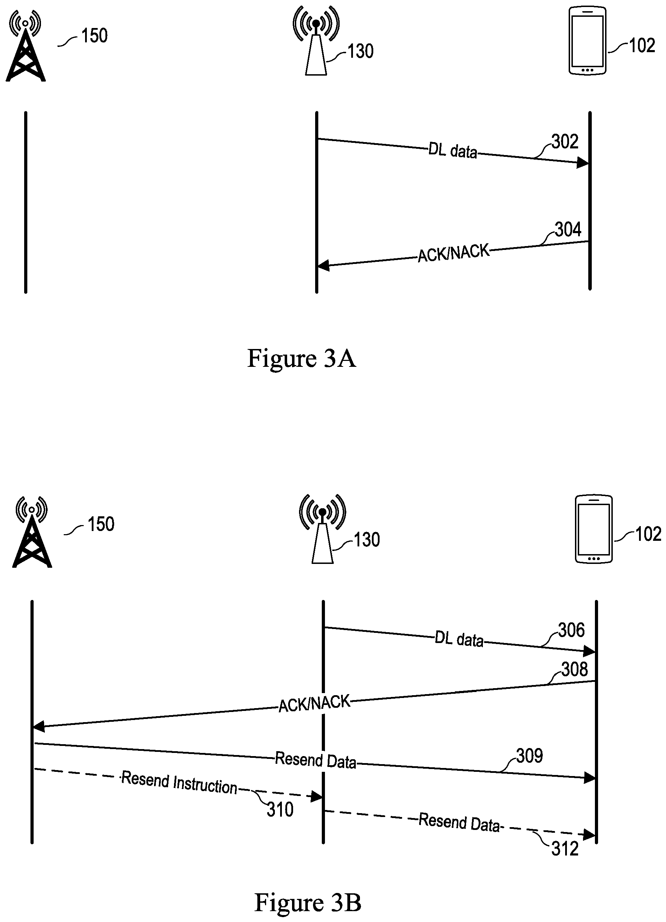

Figure 3A is a process diagram showing an aspect. In this aspect, the hybrid automatic repeat request (HARQ) process is handled by TP 130. The HARQ process determines if the data transmitted on a link were transmitted correctly and, if not, arranges for retransmission of the data. The DL data are transmitted in step 302. In this aspect, the high frequency downlink transmission time interval (TTI) is followed by a short uplink TTI for ACK/NACK, as shown in step 304. However, due to the receive processing delay in UE, acknowledgement for a downlink TTI may be transmitted several downlink TTIs later. The actual time offset can be defined in protocol or be precisely indicated by TP in downlink control channel. If the error checking procedure (e.g. checksum, hash) has detected an error and requires at least partial retransmission, a short downlink TTI may be used for retransmissions of data in which errors were previously detected. In another aspect, a new link between one of the TPs and UE may be established and the erroneous portion of the data is retransmitted.

Figure 3B is a process diagram showing another aspect of the HARQ procedure. In this procedure, after the DL data are transmitted in step 306, an ACK/NACK message is transmitted to macro eNB 150 in step 308. If there are erroneous data, the correct data are sent by macro eNB 150 directly to UE 102 in macro layer in step 309. In an alternative aspect, rather than sending the data directly from macro eNB 150, macro eNB 150 sends to TP 130 an instruction to retransmit the erroneous data in step 310, and TP 130 sends the data in step 312. The transmission in step 312 may require establishing a new high frequency link due to the delay caused by processing and transmission to and from macro eNB 150.

Figure 4 is a diagram of an aspect heterogeneous network with high frequency TPs and illustrates step 206 of Figure 2. In this figure, UE 102 has been paged by macro eNB 150. In addition, UE 102 has been instructed that high frequency TPs are available and that UE 102 should turn on its high frequency transceiver to detect any favorable high frequency link from one of TPs 130 or 132. Because high frequency signals suffer from high attenuation, beamforming is needed in TPs 130 and 132 and/or UE 102. This is accomplished by TPs 130 and 132, possibly under the guidance of macro eNB 150, using known beamforming techniques with antenna arrays. Fortunately, because of the very small wavelength of high frequency signals, the directionality and focus of the beams can be tightly controlled. However, with tightly formed beams, it must be determined which beam is useful for a particular transmission.

Figure 4 illustrates a simple process for determining which of beams B0-B11 is useful for communicating with UE 102. Figure 4 shows only 12 beams for clarity. Under most circumstances, the process will involve many more beams. However, the number of beams can be limited if a relatively accurate position for UE 102 can be determined by macro eNB 150 using, for example, GPS data from UE 102. Macro eNB 150 assigns a separate reference signal to each one of beams B0-B11. In addition, the reference signals assigned to B0-B11 are unique to UE 102. This avoids a problem if another high frequency beam acquisition process is occurring within reception range of UE 102. For this UE specific reference signal assignment, cooperation among nearby macro eNB is expected. Different set of reference signals could be assigned to neighboring macro eNBs.

In this simple process shown in Figure 4, beams B0-B11 are broadcast serially with their assigned reference signal. In an aspect, the beamformed reference signals are designed to function as training fields. The specific beam sweeping time pattern can be co-scheduled by macro eNB 150 across multiple TPs, such as TPs 130 and 132. UE 102 listens for each beam and determines a channel quality index (CQI) for each beam. The UE then selects a beam based on the CQI and feedback the downlink beam index to macro eNB 150. Macro eNB 150 may notify the selected TP with corresponding downlink beam index. However this may take a long time compared to the short transmission burst. In another aspect, UE 102 notifies the selected TP directly by initiating link establishment with the selected TP.

Because of the very large bandwidth of high frequency signals, the data can be transmitted before significant deterioration of the link due to movement of the UE or any blockage. For example, the below table compares the achievable throughput (in OFDM symbols) per transmission time interval (TTI), in various frequency ranges, assuming plausible numerology based on published research activities and existing systems such as LTE.

| | **Sub-6GHz (LTE numerology)** | **mmWave 28GHz** | **mmWave 72GHz** |
|---|---|---|---|
| Channel BW | 20MHz | 500MHz | 2GHz |
| Subcarrier spacing | 15KHz | 240KHz | 750KHz |
| Used subcarriers | 1200 | 2000 | 2400 |
| OFDM symbol length | 66.7us | 4.17us | 1.33us |
| TTI length | lms | 0.125ms | ∼0.04ms |

As can be seen from the chart, a system at 72 GHz can use a much wider bandwidth with wide sub-carrier spacing, which leads to much smaller OFDM symbol length. The OFDM symbol is shorter by a factor of 50 as compared to the LTE numerology in sub-6GHz frequency ranges, while delivering *more* data symbols by a factor of 2 with more available sub-carriers. Equivalently, the 72 GHz system can transfer in 0.04 ms the same data burst that the LTE system can transfer in 1 ms, while occupying only one fourth of the system bandwidth.

It should be noted that the table contains exemplary values for comparison purposes. Many factors may affect the actual throughput per TTI achievable using different high frequency signals.

In the example of Figure 4, TPs may form transmit and receive beams along each direction (B0∼B11) simultaneously or alternatively. Different mechanisms (as explained below) can be applied to establish a near-immediate high frequency link to accomplish a burst transmission in either uplink or downlink mode. The identity of the TP that is transmitting the selected beam can be transparent to UE 102. Only the UE specific reference signal set is sent to UE 102, which does not necessarily including any indication of the TP's identity. Each reference signal maps to one beam and one UE.

Figure 5 is a diagram showing two timing diagrams for the broadcast of beams B0-B11. In (a), beams B0-B11 are transmitted serially in time. Each includes a unique reference signal for that beam and for UE 102, which may be a Zadoff-Chu sequence, a wideband CDMA code, or any other suitable code. In an aspect, the reference signals on beams B0-B11 are all orthogonal to each other to aid UE 102 in decoding the codes. In (b), beams B0-B5, which are transmitted by TP 130, are transmitted at the same time as beams B6-B11, which are transmitted by TP 132. In another aspect, the coding for beams transmitted at the same time in the aspect of (b) (e.g. B1 and B7) have reference signals that are orthogonal and may include other techniques to facilitate discrimination of the codes by UE 102 even though they may be arriving at UE 102 at the same time.

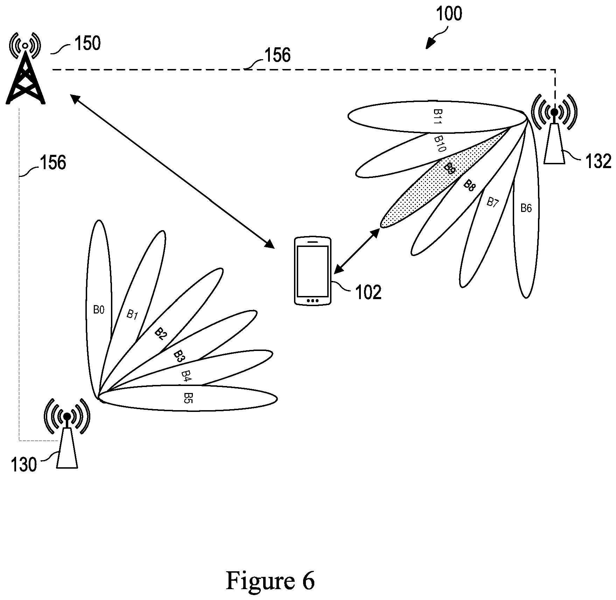

Figure 6 is a diagram illustrating network 100 when a beam has been selected. Figure 6 is like Figure 4 except that beam B9 (shaded) has been selected and a link has been established between UE 102 and TP 132 via beam B9. UE 102 may send a link setup request to TP 132 in a designated time slot. A detailed procedure for making this link is described in copending U.S. Publication No. 2017/0026962, which is co-owned with the present application. After a beam selection has been reported by the UE 102, Macro eNB 150 deactivates the non-selected high frequency TPs (in the case of Figure 4, meaning TP 130). As mentioned before, time division is preferred for UE multiplexing in high frequency burst transmission. A dedicated high frequency link resource should be assigned for each burst transmission. A flexible frame structure should be used to enable: fast beam sweeping to speed up beam detection; fast high frequency link setup; fast HARQ; and efficient data transmission. The transmission time interval (TTI) length in terms of the number of symbols is predefined, e.g. by macro eNB 150, as a standardized feature of the system, or by other means. In some aspects, the TTI length may vary based on different TP settings. Sweeping of the beams should start at a TTI boundary or frame boundary of macro eNB 150, such that UE 102 and the TPs can be synchronized to start beam detection after receiving paging information from macro eNB 150. It is assumed that the high frequency TTI is scaled by some factor preferably less than 1 relative to the macro eNB TTI. For example, a 1ms TTI in the macro eNB scales to 0.125ms in a regular high frequency TTI as noted in the table above.

In burst transmission, a high frequency link is adapted in open loop mode. In that mode, UE 102 conducts one or more downlink measurement procedures based on downlink reference signals for the selected beam. Since the high frequency link is dedicated to UE 102, UE 102 need only report wideband CQI to TP 132. In one aspect, UE 102 provides the wideband CQI back to TP 132 along with the high frequency link setup request.

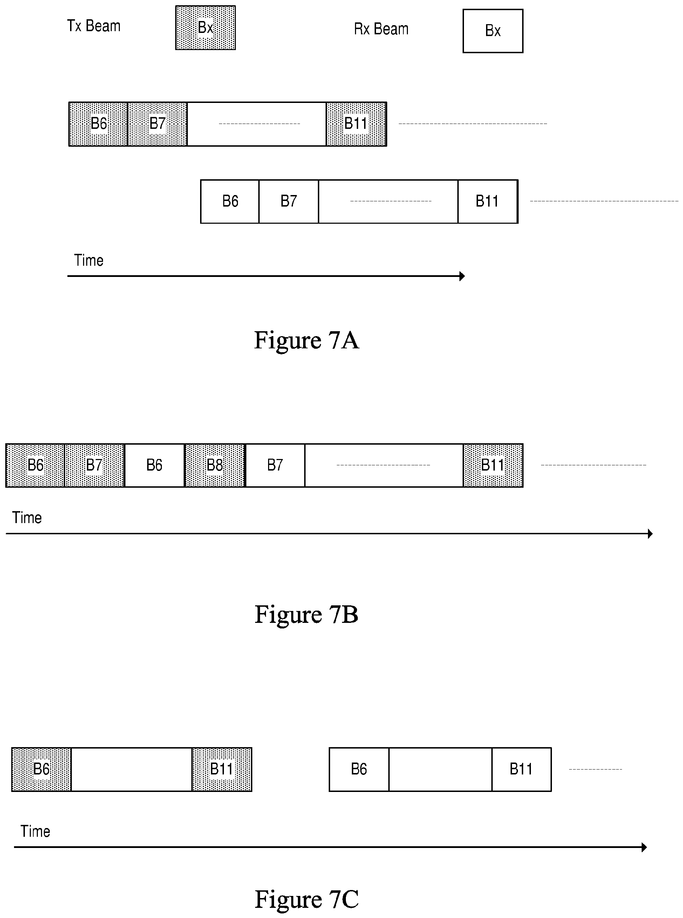

Figures 7A-7C are timing diagrams illustrating various aspects. As noted above, in order to establish a link with UE 102 (Figure 4), the TPs must both form Tx beams and Rx beams for transmitting and receiving respectively. Figures 7A-7C show different time scheduling for Tx and Rx beam forming based on TP capability. In the figures, Tx beams are shaded and Rx beams are not. The beams with the same label are formed in the same direction. Figure 7A shows an example beamforming time scheduling for a TP capable of simultaneously forming Tx and Rx beams. In this configuration, the Rx beams (lower bar) are delayed slightly from the Tx beams. This differentiation in time facilitates downlink reference signal detection delay in UE 102. In other words, UE 102 will have enough time to prepare and transmit link request along beam B6 (for example), once favorable CQI is measured in downlink beam B6. For TPs incapable of forming Tx and Rx beam simultaneously, different time scheduling methods can be applied. In Figure 7B, the Tx and Rx beams are interleaved, and thus are formed at a separate time. In this example, the Tx beams for B6 and B7 are followed by the Rx beam B6. This allows for determination of the CQI of the Tx beam before the Rx beam. As an example, if the CQI for the Tx beam B6 is appropriate for link formation, UE will send a link setup request in the following Rx beam B6. If the CQI for the Rx of the selected Tx beam is determined to be sub-optimal, the UE 102 can continue downlink beam detection. Another alternative is shown in Figure 7C, where TP sends all beamformed reference signals in turn in the first stage and then listens to each direction in the same order in second stage. UE will first conduct beam detection in first stage and then send link setup request along the best beam direction in the second stage.

Once a downlink beam direction is selected, in another aspect, the UE 102 immediately begins the process of establishing a link with the TP using the selected beams. The TP will then cease sending beamformed reference signals. This minimizes the time necessary to establish the high frequency link.

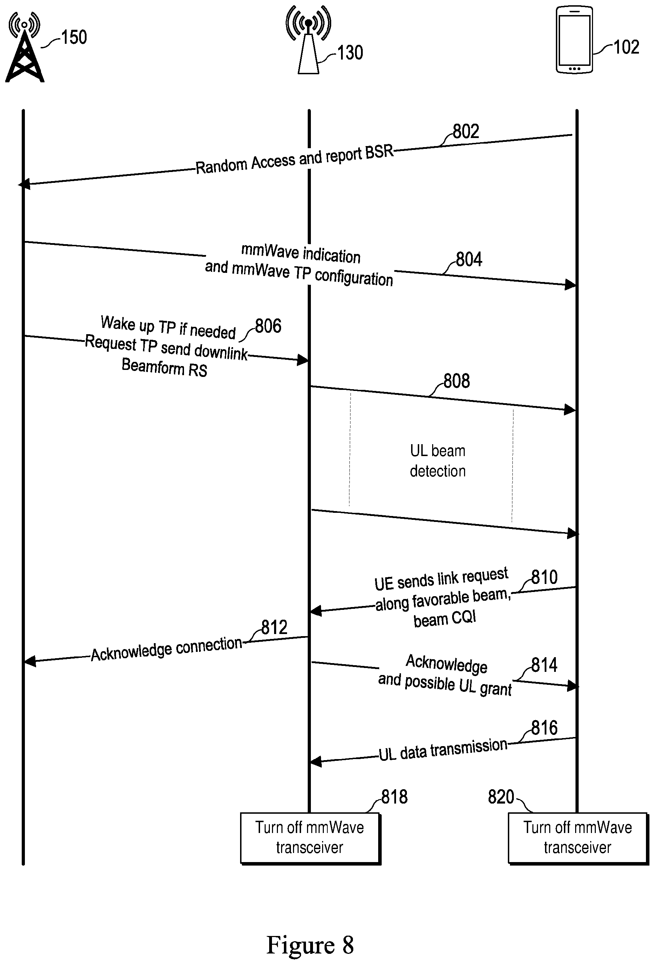

Figure 8 is a diagram of an aspect process for creating an uplink (UL) burst transmission using a high frequency TP. In step 802, UE 102 initiates random access and sends a link request to the macro eNB 150 including a buffer status report (BSR) or comparable status information indicating that UE 102 has data to transmit. In this transmission, UE 102 may indicate whether it is high frequency capable or not. For example, the indication can be carried in step 802 with the preamble of a random access transmission. In step 804, if macro eNB 150 determines that the UE's requested UL data transmission should be handled on a high frequency channel, macro eNB 150 returns an indication that the TPs controlled by macro eNB 150 include high frequency capability and provides a configuration of high frequency TPs, the available frequencies, etc. to UE 102. In one aspect, the configuration sent to UE 102 and the TPs is optimized for an estimated position of UE 102. In step 806, macro eNB 150 sends a wake-up command to the TPs that it considers may be relevant to communication with UE 102, including or accompanied by a command for these TPs to transmit DL beamformed reference signals. In step 808, the TPs send reference signals in selected downlink beams for DL beam detection using the procedures described with regard to Figures 4-7 above. In step 810, UE 102 sends a link request for a link using a favorable beam to TP 130. As noted above with regard to step 210 in Figure 2, the link request can be sent directly to TP 130 using the selected favorable beam or can be relayed to TP 130 via macro eNB 150 and the fronthaul connections 156. The direct request avoids traversing macro eNB 150 and fronthaul connections 156, which leads to faster creation of the link. The beam detection and report procedures follow the procedures described in downlink burst transmission. In step 812, TP 130 acknowledges the connection with a message to macro eNB 150 and in step 814, TP 130 acknowledges the connection request with a message to UE 102. The initial MCS of the link may be determined using the CQI measured by UE 130 based on the DL beam. There may be an adjustment of the power and MCS of the UL during transmission. However, because of the short duration of the link, this adjustment will be rare. In addition, an uplink grant may be issued, if necessary, to allow transmission of further uplink data in a subsequent TTI. In step 816, the UL data is transmitted. In steps 818 and 820, the high frequency transceivers of TP 130 and UE 102, respectively, are turned off. As with the DL transmission of Figure 2, if the high frequency link failed before transmission was completed, macro eNB 150 can decide whether take over the retransmission in a low frequency layer or to initiate a new high frequency burst transmission, potentially using a different TP.

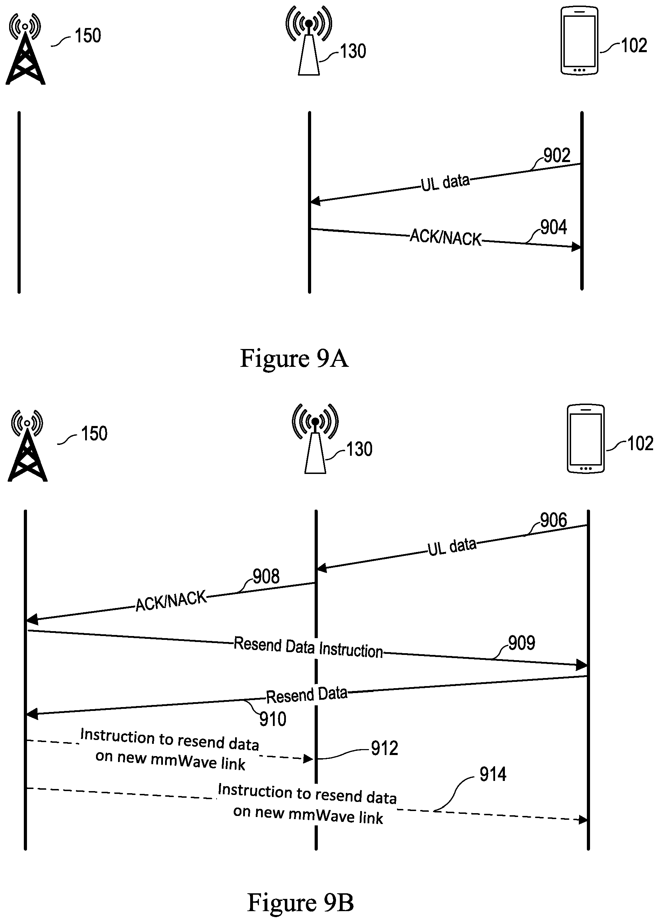

Figure 9A is a process diagram showing one aspect. In this aspect, the hybrid automatic repeat request (HARQ) process is handled by TP 130. The UL data are transmitted in step 902. In this aspect, in UL burst transmission, UL TTI is followed by a short DL TTI for ACK/NACK, as shown in step 904. If the error checking procedure (e.g. checksum, hash) detects an error and requires at least partial retransmission, a short UL TTI may be used for partial retransmissions of data for which a reception error was previously indicated. In another aspect, a new link between one of the TPs and UE may need to be established and the affected data are retransmitted.

Figure 9B is a process diagram showing another aspect HARQ procedure. In this procedure, after the UL data are transmitted in step 906, an ACK/NACK message is transmitted from TP 130 to macro eNB 150 in step 908. If the ACK/NACK message indicates erroneous data reception, an instruction to retransmit the affected data is sent by macro eNB 150 directly to UE 102 in step 909, causing UE 102 to retransmit the data to macro eNB 150 in step 910. In an alternative aspect, rather than UE 102 resending the data to macro eNB 150, UE 102 resends the data to TP 130, which then resends the data to macro eNB 150. If the transmission fails again, an instruction to resend the affected data on a new link is sent to TP 130 in step 912. At the same time, macro eNB 150 sends to TP 130 a message leading it to expect the retransmission, in step 914. UE 102 then retransmits the affected data to TP 130. The transmission may require establishing a new high frequency link between UE 102 and TP 130, e.g. due to the delay caused by processing and transmission to and from macro eNB 150. During this delay the radio environment may have changed so that the beam previously selected by the UE is no longer the preferred beam for the retransmission.

One issue that may occur with the processes of either Figures 2 or 8 is contention among UEs. Due to the very short transmission times involved, UE contention should happen rarely when using high frequency burst transmission. However, in a network with a dense UE distribution, it is still possible that one high frequency TP may be scheduled by two macro eNBs to set up burst transmissions with two UEs simultaneously. There are different ways to resolve such conflicts. The Network can limit the association of TPs to one macro eNB at a time. That is, high frequency TP only associates to one macro eNB for some period of time.

This will prevent a conflict, but may be less efficient than other approaches. In another option, the macro eNB 150 can exchange high frequency TP status with other macro eNBs, e.g. using an X2 interface, to help resolve instances of contention. One or more macro eNBs may coordinate to ensure that high frequency configurations delivered to different UEs never contain a common TP at the same time.

The contention can also be resolved at the TP level. In some configurations, the TPs may associate with multiple macro eNBs. The decision on which link request is served may sometimes require resolution at the TP level, e.g., if contention occurs between UEs that were configured by different macro eNBs towards the same TP. In this configuration, the TP may locally decide which request to serve while rejecting others.

In the case where multiple UEs are assigned to one TP, contention can occur when two UEs identify the same beam for UL/DL transmission and each UE sends a link setup request. This type of contention can be prevented by assigning orthogonal resources to each UE for sending its link setup request. This allows the TP to determine which UEs are requesting a link even if the requests are sent at the same time. The TP can then decide which UE to serve first and set up its UL/DL connection(s) accordingly. In the case of a DL burst, the TP sends DL data to selected UE. The other UE will determine from the destination coding in the frame that the data is not for it and then continue to search for other beams. In the case of a UL burst, the TP sends a UL grant addressed to the selected UE. Since it did not receive a grant, the other UE will assume a link setup failure and continue to search other beams.

Due to the very short transmission time of high frequency bursts, there are usually no mobility issues in the high frequency layer. However, some procedures are needed in case a macro cell handover happens close to the time of a burst transmission. Preferably, the macro eNB should not initiate any burst transmission in high frequency layer when a macro cell handover is ongoing or about to happen. However, not all handovers can be anticipated or delayed, and it is contemplated in that a high frequency burst transmission may still happen during macro eNB handover. In this circumstance, the initial high frequency layer configuration process (macro eNB wakes up associated TPs and sends TP configuration to UE) should be completed before the handover. The high frequency link setup and burst transmission may go on as usual. However, the high frequency link setup acknowledgement and HARQ need to be relayed to the target macro eNB during handover. If a low frequency layer retransmission is needed, it will be handled by the target macro eNB. If the initial configuration process cannot be completed before the handover, the high frequency burst transmission fails and the procedure may need to be restarted in the target macro eNB.

In the high frequency layer, continuous traffic advantageously uses the burst transmission process if the continuous traffic can be divided into burst traffic blocks with short duty cycles. In this context, a short duty cycle means that the UE is in discontinuous reception (DRX) mode with substantially longer sleep mode than the reception (Rx) mode. However, the sleep mode is still shorter than it would be with a longer duty cycle, such as long DRX, or eDRX mode. These modes would involve a sleep period or "off period" that is too long to expect stable radio conditions in the high frequency layer. For example, for downlink for video streaming, the UE remains connected to the macro eNB via the low frequency network. The downlink traffic is segmented into multiple data blocks, each of which may still be large compared to most blocks of packet data. Instead of continuous downlink transmission on the macro layer at a relatively low rate, high rate burst transmissions are conducted intermittently or periodically, using the high frequency layer, to deliver those large blocks of data. Due to the large bandwidth in high frequency transmission, a large amount of data can be delivered to the UE in one burst, which means that a DRX configuration can be applied, with a duty cycle long enough to show meaningful benefits in power saving. UE can switch off the high frequency transceiver in between bursts to save power. However, the high data rate of the service means that a burst transmission is still required relatively frequently, corresponding to a DRX activity cycle that may be short enough to allow continuous operation on the high frequency layer. Retransmissions for error correction in this mode can be delivered in the low frequency layer, which requires much less bandwidth. In a normal link adaptation scenario, a 10% block error rate (BLER) is a typical targeted value. To further reduce the retransmission required of the low frequency layer, a lower BLER target can be set for high frequency link adaptation, resulting in more robust transmissions for which errors are less likely. As one aspect of a short duty cycle DRX configuration, a semi-persistent scheduling (SPS) like mechanism can also be applied. In this configuration, the macro eNB gives a semi-persistent TP configuration and corresponding DRX/DTX settings to UE. UE then performs the burst transmission/reception periodically.

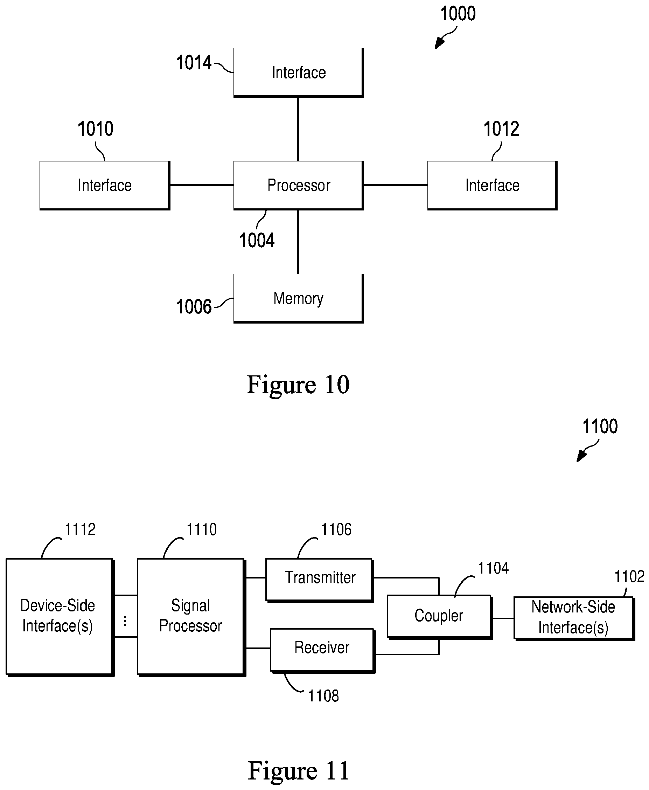

Figure 10 illustrates a block diagram of an aspect processing system 1000 which may be installed in a host device, such as macro eNB 150, TP 130 and/or UE 102. As shown, the processing system 1000 includes a processor 1004, a memory 1006, and interfaces 1010-1014, which may (or may not) be arranged as shown in Figure 10. The processor 1004 may be any component or collection of components adapted to perform computations and/or other processing related tasks, and the memory 1006 may be any component or collection of components adapted to store programming and/or instructions for execution by the processor 1004. In an aspect, the memory 1006 includes a non-transitory computer readable medium. The interfaces 1010, 1012, 1014 may be any component or collection of components that allow the processing system 1000 to communicate with other devices/components and/or a user. For example, one or more of the interfaces 1010, 1012, 1014 may be adapted to communicate data, control, or management messages from the processor 1004 to applications installed on the host device and/or a remote device. As another example, one or more of the interfaces 1010, 1012, 1014 may be adapted to allow a user or user device (e.g., personal computer (PC), etc.) to interact/communicate with the processing system 1000. The processing system 1000 may include additional components not depicted in Figure 10, such as long term storage (e.g., disk storage, non-volatile memory, etc.).

In some aspects, the processing system 1000 is included in a network device that is accessing, or part otherwise of, a telecommunications network. In one example, the processing system 1000 is in a network-side device in a wireless or wireline telecommunications network, such as a base station, a relay station, a scheduler, a controller, a gateway, a router, an applications server, or any other device in the telecommunications network. In other aspects, the processing system 1000 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some aspects, one or more of the interfaces 1010, 1012, 1014 connects the processing system 1000 to a transceiver adapted to transmit and receive signaling over the telecommunications network components, such as macro eNB 150, TP 130 and/or UE 102. Figure 11 illustrates a block diagram of a transceiver 1100 adapted to transmit and receive signaling over a telecommunications network. The transceiver 1100 may be installed in a host device. As shown, the transceiver 1100 comprises a network-side interface 1102, a coupler 1104, a transmitter 1106, a receiver 1108, a signal processor 1110, and a device-side interface 1112. The network-side interface 1102 may include any component or collection of components adapted to transmit or receive signaling over a wireless or wireline telecommunications network. The coupler 1104 may include any component or collection of components adapted to facilitate bi-directional communication over the network-side interface 1102. The transmitter 1106 may include any component or collection of components (e.g., up-converter, power amplifier, etc.) adapted to convert a baseband signal into a modulated carrier signal suitable for transmission over the network-side interface 1102. The receiver 1108 may include any component or collection of components (e.g., down-converter, low noise amplifier, etc.) adapted to convert a carrier signal received over the network-side interface 1102 into a baseband signal. The signal processor 1110 may include any component or collection of components adapted to convert a baseband signal into a data signal suitable for communication over the device-side interface(s) 1112, or vice-versa. The device-side interface(s) 1112 may include any component or collection of components adapted to communicate data-signals between the signal processor 1110 and components within the host device (e.g., local area network (LAN) ports, etc.).

The transceiver 1100 may transmit and receive signaling over any type of communications medium. In some aspects, the transceiver 1100 transmits and receives signaling over a wireless medium. For example, the transceiver 1100 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such aspects, the network-side interface 1102 comprises one or more antenna/radiating elements. For example, the network-side interface 1102 may include a single antenna, multiple separate antennas, or a multi-antenna array configured for multi-layer communication, e.g., single input multiple output (SIMO), multiple input single output (MISO), multiple input multiple output (MIMO), etc. In other aspects, the transceiver 1100 transmits and receives signaling over a wireline medium, e.g., twisted-pair cable, coaxial cable, optical fiber, etc. Specific processing systems and/or transceivers may utilize all of the components shown, or only a subset of the components and levels of integration may vary from device to device.

While the aspects have been described with reference to illustrative aspects, this description is not intended to be construed in a limiting sense. Various modifications and combinations of the illustrative aspects, as well as other aspects, will be apparent to persons skilled in the art upon reference to the description. The protection is defined by the scope of the appended claims.

## Claims

1. A method for providing a data link between one or more high frequency transmission points, TPs, and a user equipment, UE, in a wireless network, the method comprising:
receiving (202), by the UE, an assignment from a macro cell manager in the wireless network, wherein the assignment includes a UE specific reference signal set that maps to one or more high frequency TP downlink beams, wherein each UE specific reference signal uniquely identifies an individual high frequency TP downlink beam and the UE;
identifying (206), by the UE, each of the one or more TP downlink beams by detecting the UE specific reference signals sent in each of the one or more TP downlink beams;
measuring, by the UE, a quality of each of the one or more TP downlink beams;
selecting a selected beam from the one or more TP downlink beams based on the quality; and
establishing, by the UE, the data link to the high frequency TP that transmitted the selected beam using the selected beam.

2. The method of claim 1, wherein the macro cell manager includes a low frequency transceiver and controls the one or more TPs, and wherein the receiving an assignment is transmitted using the low frequency transceiver.

3. The method of claim 1, wherein the TP downlink beamformed reference signals are sent in an extended transmission time interval, TTI, and the length of the TTI is defined by the macro cell manager.

4. The method of claim 1, wherein UE sends a link setup request and channel quality indicator, CQI, to high frequency TP once it detects favorable one of the plurality of high frequency TP downlink beams and then waits for an uplink, UL, grant for UL burst transmission or a downlink, DL, data from the high frequency TP that transmitted in the selected beam.

5. The method of claim 4, wherein the link setup request can be directly sent to the TP along the favorable beam direction based on the preconfigured Tx-Rx beamforming time pattern.

6. A method for providing a data link between a high frequency transmission point, TP, and a user equipment, UE, in a wireless network, the method comprising:
receiving (204), by the TP, an assignment from a macro cell manager, wherein the assignment includes a UE specific reference signal set which maps to a plurality of high frequency TP downlink beams, wherein each UE specific reference signal uniquely identifies an individual high frequency TP downlink beam and the UE; and
sending (206), by the TP, the plurality of beams;
detecting (210), by the TP, a UE link setup request to setup a link on one of the plurality of beams; and
reporting (212), by the TP, a link setup indication to a macro cell.

7. The method of claim 6, wherein TP sends the plurality of beams in a serial manner until the detecting of the UE link set up request.

8. The method of claim 6, wherein the TP discontinues sending the plurality of beams transmission once it receives the UE link setup request and sends downlink, DL, data or an uplink, UL, grant at a next high frequency transmission time interval, TTI, boundary.

9. A method for providing data link between a designated high frequency transmission point, TP, and a user equipment, UE, in a wireless network, the method comprising:
sending (202), by a macro cell manager, an high frequency availability indication to the UE;
sending (204), by the macro cell manager, an assignment to the TPs, wherein the assignment includes a UE specific reference signal set which maps to a plurality of high frequency TP downlink beams, wherein each UE specific reference signal uniquely identifies an individual high frequency TP downlink beam and the UE;
receiving , by macro cell manager, UE context information; and
receiving (216), by macro cell manager, ACK/NACK from the UE for downlink burst transmission or from the TP for uplink burst transmission.

10. The method of claim 9, wherein the macro cell manager determines whether to establish a burst transmission between the TP and the UE, and macro cell manager pages the UE and collects UE context information, and wherein the UE context information is used in a decision by the macro cell manager of whether or not to establish a DL burst transmission.

11. The method of claim 9, wherein macro cell manager provides hybrid automatic repeat request, HARQ, in a low frequency.

12. The method of claim 9, wherein for downlink, DL, burst transmission, macro cell manager ACK/NACK from the UE and provides retransmission in the low frequency.

13. A user equipment, UE, configured to provide a data link between the UE and one or more high frequency transmission points, TPs, in a wireless network comprising:
a first transceiver (1106, 1108, 1104) operating in a high frequency band;
a second transceiver (1106, 1108, 1104) operating in a low frequency band; and
a processor (1110) for executing instructions including:
receiving an assignment from a macro cell manager in the wireless network, wherein the assignment includes a UE specific reference signal set that maps to a plurality of high frequency TP downlink beams, wherein each UE specific reference signal uniquely identifies an individual high frequency TP downlink beam and the UE;
identifying each of the plurality of TP downlink beams by detecting the UE specific reference signals sent in each of the plurality of TP downlink beams;
measuring a quality of each of the plurality of TP downlink beams;
selecting a selected beam from one of the plurality of TP downlink beams based on the quality; and
establishing the data link to the high frequency TP that transmitted the selected beam using the selected beam.

14. A high frequency transmission point, TP, configured to provide a data link between the TP and a user equipment, UE, in a wireless network comprising:
a communication link to a macro cell manager;
a transceiver (1106, 1108, 1104) for communicating in a high frequency band; and
a processor (1110) for executing instructions including:
receiving an assignment from the macro cell manager, wherein the assignment includes a UE specific reference signal set which maps to a plurality of high frequency TP downlink beams, wherein each UE specific reference signal uniquely identifies an individual high frequency TP downlink beam and the UE; and
sending the plurality of beams using the transceiver;
detecting a UE link setup request to setup a link on one of the plurality of beams; and
reporting a link setup indication to macro cell manager.

15. A macro cell manager configured to provide a data link between a designated high frequency transmission point, TP, and a user equipment, UE, in a wireless network comprising:
a first transceiver (1106, 1108, 1104) operating in a high frequency band;
a second transceiver (1106, 1108, 1104) operating in a low frequency band; and
a processor (1110) for executing instructions including:
sending a high frequency availability indication to the UE using the second transceiver;
sending an assignment to the TP, wherein the assignment includes a UE specific reference signal set which maps to a plurality of high frequency TP downlink beams, wherein each UE specific reference signal uniquely identifies an individual high frequency TP downlink beam and the UE;
receiving UE context information from the UE; and
receiving ACK/NACK from the UE for downlink burst transmission or from the TP for uplink burst transmission.

## Patentansprüche

1. Verfahren zur Bereitstellung einer Datenverbindung zwischen einem oder mehreren Hochfrequenz-Übertragungspunkten (TPs, *transmission points*) und einem Benutzergerät (UE, *user equipment),* in einem drahtlosen Netzwerk, Folgendes umfassend:
Empfangen (202) einer Zuweisung von einem Makrozellenmanager in dem drahtlosen Netzwerk durch das UE, wobei die Zuweisung einen UE-spezifischen Referenzsignalsatz enthält, der auf einen oder mehrere Hochfrequenz-TP-Downlink-Strahlen abgebildet wird, wobei jedes UE-spezifische Referenzsignal eindeutig einen einzelnen Hochfrequenz-TP-Downlink-Strahl und das UE identifiziert;
Identifizieren (206) jedes der einen oder mehreren TP-Downlink-Strahlen durch das UE durch Erfassen der UE-spezifischen Referenzsignale, die in jedem der einen oder mehreren TP-Downlink-Strahlen gesendet werden;
Messen einer Qualität von jedem des einen oder der mehreren TP-Downlink-Strahlen durch das UE;
Auswählen eines ausgewählten Strahls aus dem einen oder den mehreren TP-Downlink-Strahlen basierend auf der Qualität; und
Herstellen, durch das UE, der Datenverbindung zu der Hochfrequenz-TP, die den ausgewählten Strahl unter Verwendung des ausgewählten Strahls gesendet hat.

2. Verfahren nach Anspruch 1, wobei der Makrozellenmanager einen Niederfrequenz-Transceiver umfasst und den einen oder die mehreren TPs steuert, und wobei das Empfangen einer Zuordnung unter Verwendung des Niederfrequenz-Transceivers gesendet wird.

3. Verfahren nach Anspruch 1, wobei die strahlförmigen TP-Downlink-Referenzsignale in einem erweiterten Übertragungszeitintervall (TTI, *transmission time interval*) gesendet werden und die Länge des TTI durch den Makrozellenmanager definiert wird.

4. Verfahren nach Anspruch 1, wobei ein UE eine Verbindungsaufbau-Anforderung und einen Kanalqualitätsindikator (CQI, *channel quality indicator*) an einen Hochfrequenz-TP sendet, sobald es einen der mehreren Hochfrequenz-TP-Downlink-Strahlen als günstig erkennt und anschließend auf eine Uplink (UL)-Genehmingung für eine UL-Burst-Übertragung oder auf Downlink (DL)-Daten von dem Hochfrequenz-TP, der im ausgewählten Strahl übertragen hat, wartet.

5. Verfahren nach Anspruch 4, wobei die Verbindungsaufbau-Anforderung direkt an den TP entlang der günstigen Strahlrichtung auf der Grundlage des voreingestellten Tx-Rxstrahlenerzeugenden Zeitmusters gesendet werden.

6. Verfahren zum Bereitstellen einer Datenverbindung zwischen einem Hochfrequenz-Übertragungspunkt (TP, *transmission point)* und einem Benutzergerät (UE, *user equipment)* in einem drahtlosen Netzwerk, wobei das Verfahren umfasst:
Empfangen (204), durch einen TP, einer Zuweisung von einem Makrozellenmanager, wobei die Zuweisung einen UE-spezifischen Referenzsignalsatz enthält, der auf mehreren Hochfrequenz-TP-Downlink-Strahlen abgebildet wird, wobei jedes UE-spezifische Referenzsignal eindeutig einen einzelnen Hochfrequenz-TP-Downlink-Strahl und das UE identifiziert; und
Senden (206) der mehreren Strahlen durch das TP;
Erfassen (210) einer UE-Verbindungsaufbau-Anforderung durch den TP, um eine Verbindung auf einem der mehreren Strahlen aufzubauen; und
Melden (212) einer Verbindungsaufbauanzeige an eine Makrozelle durch den TP.

7. Verfahren nach Anspruch 6, wobei der TP die mehreren Strahlen auf serielle Weise sendet, bis die UE-Verbindungsaufbau-Anforderung erkannt wird.

8. Verfahren nach Anspruch 6, wobei der TP die Übertragung der mehreren Strahlen unterbricht, sobald er die UE-Verbindungsaufbau-Anforderung empfangen hat, und Downlink (DL)-Daten oder eine Uplink (UL)-Genehmigung bei einer nächsten Hochfrequenz-Übertragungszeitintervallgrenze (TTI, *transmission time interval*) sendet.

9. Verfahren zum Bereitstellen einer Datenverbindung zwischen einem bestimmten Hochfrequenz-Übertragungspunkt (TP, *transmission point)* und einem Benutzergerät (UE, *user equipment)* in einem drahtlosen Netzwerk, wobei das Verfahren umfasst:
Senden (202) einer Hochfrequenz-Verfügbarkeitsanzeige durch einen Makrozellenmanager an das UE;
Senden (204) einer Zuweisung an den TPs durch den Makrozellenmanager, wobei die Zuweisung einen UE-spezifischen Referenzsignalsatz enthält, der auf mehreren Hochfrequenz-TP-Downlink-Strahlen abgebildet wird, wobei jedes UE-spezifische Referenzsignal eindeutig einen einzelnen Hochfrequenz-TP-Downlink-Strahl und das UE identifiziert;
Empfangen von UE-Kontextinformationen durch den Makrozellenmanager; und
Empfangen (216) von ACK/NACK durch den Makrozellenmanager von dem UE für eine Downlink-Burst-Übertragung oder von dem TP für eine Uplink-Burst-Übertragung.

10. Verfahren nach Anspruch 9, wobei der Makrozellenmanager bestimmt, ob eine Burst-Übertragung zwischen dem TP und dem UE hergestellt werden soll, und der Makrozellenmanager das UE paginiert und UE-Kontextinformationen sammelt, und wobei die UE-Kontextinformationen für eine Entscheidung des Makrozellenmanagers verwendet werden, nämlich, ob eine DL-Burst-Übertragung hergestellt werden soll oder nicht.

11. Verfahren nach Anspruch 9, wobei der Makrozellenmanager eine hybride automatische Wiederholungsanforderung (HARQ, *hybrid automatic repeat request*) in einer niedrigen Frequenz stellt.

12. Verfahren nach Anspruch 9, wobei für die Downlink-Burst-Übertragung der Makrozellenmanager ACK/NACK von dem UE und eine Neuübertragung in Niederfrequenz liefert.

13. Benutzergerät (UE, *user equipment),* konfiguriert, um eine Datenverbindung zwischen dem UE und einem oder mehreren Hochfrequenz-Übertragungspunkten (TPs, *transmission points*) in einem drahtlosen Netzwerk zu schaffen, umfassend:
einen ersten Transceiver (1106, 1108, 1104), der in einem Hochfrequenzband arbeitet;
einen zweiten Transceiver (1106, 1108, 1104), der in einem Niederfrequenzband arbeitet; und
einen Prozessor (1110) zum Ausführen von Anweisungen, einschließlich:
Empfangen einer Zuweisung von einem Makrozellenmanager in dem drahtlosen Netzwerk, wobei die Zuweisung einen UE-spezifischen Referenzsignalsatz enthält, der auf einer Vielzahl von Hochfrequenz-TP-Downlink-Strahlen abgebildet wird, wobei jedes UE-spezifische Referenzsignal eindeutig einen einzelnen Hochfrequenz-TP-Downlink-Strahl und das UE identifiziert;
Identifizieren jedes der Vielzahl von TP-Downlink-Strahlen durch Erfassen der UE-spezifischen Referenzsignale, die in jedem der mehreren TP-Downlink-Strahlen gesendet werden;
Messen einer Qualität von jedem der Vielzahl von TP-Downlink-Strahlen;
Auswählen eines ausgewählten Strahls aus einem der Vielzahl von TP-Downlink-Strahlen auf der Grundlage der Qualität; und
Herstellen der Datenverbindung zu dem Hochfrequenz-TP, das den ausgewählten Strahl unter Verwendung des ausgewählten Strahls gesendet hat.

14. Hochfrequenz-Übertragungspunkt, (TP, *transmission point)* konfiguriert, um eine Datenverbindung zwischen dem TP und einem Benutzergerät, (UE, *user equipment)* in einem drahtlosen Netzwerk zu schaffen, umfassend:
eine Kommunikationsverbindung zu einem Makrozellenmanager;
einen Transceiver (1106, 1108, 1104) zum Kommunizieren in einem Hochfrequenzband; und
einen Prozessor (1110) zum Ausführen von Anweisungen, einschließlich:
Empfangen einer Zuweisung von dem Makrozellenmanager, wobei die Zuweisung einen UE-spezifischen Referenzsignalsatz enthält, der auf mehreren Hochfrequenz-TP-Downlink-Strahlen abgebildet wird, wobei jedes UE-spezifische Referenzsignal eindeutig einen einzelnen Hochfrequenz-TP-Downlink-Strahl und das UE identifiziert; und
Senden der Vielzahl von Strahlen unter Verwendung des Transceivers;
Erkennen einer UE-Verbindungsanforderung zum Einrichten einer Verbindung auf einem der Vielzahl von Strahlen; und
Meldung eines Verbindungsaufbaus an den Makrozellenmanager.

15. Makrozellenmanager, dafür konfiguriert, eine Datenverbindung zwischen einem bestimmten Hochfrequenz-Übertragungspunkt (TP, *transmission point)* und einem Benutzergerät (UE, *user equipment)* in einem drahtlosen Netzwerk bereitzustellen, umfassend:
einen ersten Transceiver (1106, 1108, 1104), der in einem Hochfrequenzband arbeitet;
einen zweiten Transceiver (1106, 1108, 1104), der in einem Niederfrequenzband arbeitet; und
einen Prozessor (1110) zum Ausführen von Anweisungen, einschließlich:
Senden einer Hochfrequenzverfügbarkeitsanzeige an das UE unter Verwendung des zweiten Transceivers;
Senden einer Zuweisung an den TP, wobei die Zuweisung einen UE-spezifischen Referenzsignalsatz enthält, der auf mehreren Hochfrequenz-TP-Downlink-Strahlen abgebildet wird, wobei jedes UE-spezifische Referenzsignal eindeutig einen einzelnen Hochfrequenz-TP-Downlink-Strahl und das UE identifiziert;
Empfangen von UE-Kontextinformationen von dem UE; und
Empfangen von ACK/NACK von dem UE für die Downlink-Burst-Übertragung oder vom TP für die Uplink-Burst-Übertragung.

## Revendications

1. Procédé d'établissement d'une liaison de données entre un ou plusieurs points d'émission (TP) à haute fréquence et un équipement d'utilisateur (UE) dans un réseau sans fil, le procédé consistant à :
recevoir (202), au moyen de l'UE, une attribution provenant d'un gestionnaire de macrocellules dans le réseau sans fil, l'attribution comprenant un ensemble de signaux de référence spécifique à l'UE, qui est mappé vers un ou plusieurs faisceaux de liaison descendante de TP à haute fréquence, chaque signal de référence spécifique à l'UE identifiant de manière unique un faisceau individuel de liaison descendante de TP à haute fréquence et l'UE ;
identifier (206), au moyen de l'UE, de chacun des faisceaux de liaison descendante de TP en détectant les signaux de référence spécifiques à l'UE envoyés dans chacun des faisceaux de liaison descendante de TP ;
mesurer, au moyen de l'UE, une qualité de chacun des faisceaux de liaison descendante de TP ;
sélectionner un faisceau sélectionné parmi le ou les faisceaux de liaison descendante de TP en fonction de la qualité ; et à
établir, au moyen de l'UE, la liaison de données avec le TP à haute fréquence qui a émis le faisceau sélectionné au moyen du faisceau sélectionné.

2. Procédé selon la revendication 1, dans lequel le gestionnaire de macrocellules comprend un émetteur-récepteur basse fréquence et commande le ou les TP, et dans lequel la réception d'une attribution est émise au moyen de l'émetteur-récepteur basse fréquence.

3. Procédé selon la revendication 1, dans lequel les signaux de référence sous forme de faisceau de liaison descendante de TP sont envoyés dans un intervalle de temps d'émission (ITT) prolongé, et la longueur de l'ITT est définie par le gestionnaire de macrocellules.

4. Procédé selon la revendication 1, dans lequel l'UE envoie une demande d'établissement de liaison et un indicateur de qualité de canal (CQI) au TP à haute fréquence une fois qu'il détecte un faisceau favorable parmi la pluralité de faisceaux de liaison descendante de TP à haute fréquence, puis attend une autorisation liaison montante (UL) pour la transmission par rafales UL ou des données de liaison descendante (DL) provenant du TP à haute fréquence qui a émis le faisceau sélectionné.

5. Procédé selon la revendication 4, dans lequel la demande d'établissement de liaison peut être directement envoyée au TP suivant la direction de faisceau favorable sur la base du modèle temporel de formation de faisceau Tx-Rx pré-configuré.

6. Procédé destiné à fournir une liaison de données entre un point d'émission (TP) à haute fréquence et un équipement d'utilisateur (UE) dans un réseau sans fil, le procédé consistant à :
recevoir (204), au moyen du TP, une attribution provenant d'un gestionnaire de macro-cellules, l'attribution comprenant un ensemble de signaux de référence spécifique à l'UE, qui est mappé vers une pluralité de faisceaux de liaison descendante de TP à haute fréquence, chaque signal de référence spécifique à l'UE identifiant de manière unique un faisceau individuel de liaison descendante de TP à haute fréquence et l'UE ;
envoyer (206), au moyen du TP, la pluralité de faisceaux ;
détecter (210), au moyen du TP, d'une demande d'établissement de liaison d'UE pour établir une liaison sur un faisceau de la pluralité de faisceaux ; et
signaler (212), au moyen du TP, une indication d'établissement de liaison à une macrocellule.

7. Procédé selon la revendication 6, dans lequel le TP envoie la pluralité de faisceaux en série jusqu'à la détection de la demande d'établissement de liaison d'UE.

8. Procédé selon la revendication 6, dans lequel le TP cesse d'envoyer la pluralité de faisceaux de transmission lorsqu'il reçoit la demande d'établissement de liaison d'UE et envoie des données de liaison descendante (DL) ou une autorisation de liaison montante (UL) selon une prochaine limite d'intervalle de temps de transmission (ITT) haute fréquence.

9. Procédé d'établissement d'une liaison de données entre un point d'émission (TP) à haute fréquence désigné et un équipement d'utilisateur (UE) dans un réseau sans fil, le procédé consistant à :
envoyer (202), au moyen d'un gestionnaire de macrocellules, une indication de disponibilité haute fréquence à l'UE ;
envoyer (204), au moyen du gestionnaire de macrocellules, une attribution aux TP, l'attribution comprenant un ensemble de signaux de référence spécifique à l'UE, qui est mappé vers une pluralité de faisceaux de liaison descendante de TP à haute fréquence, chaque signal de référence spécifique à l'UE identifiant de manière unique un faisceau individuel de liaison descendante de TP à haute fréquence et l'UE ;
recevoir, au moyen du gestionnaire de macrocellules, des informations de contexte d'UE ; et à
recevoir (216), au moyen du gestionnaire de macrocellules, des informations ACK/NACK provenant de l'UE pour une transmission par rafales de liaison descendante ou provenant du TP pour une transmission par rafales sur la liaison montante.

10. Procédé selon la revendication 9, dans lequel le gestionnaire de macrocellules détermine s'il est nécessaire d'établir une transmission par rafales entre le TP et l'UE, et le gestionnaire de macrocellules redirige l'UE et collecte des informations de contexte d'UE, et les informations de contexte d'UE étant utilisées dans une décision, prise par le gestionnaire de macro-cellules, d'établir ou non une transmission par rafales sur DL.

11. Procédé selon la revendication 9, dans lequel le gestionnaire de macrocellules émet une demande de répétition automatique hybride (HARQ) dans une basse fréquence.

12. Procédé selon la revendication 9, dans lequel, pour la transmission par rafales sur liaison descendante (DL), le gestionnaire de macrocellules reçoit des informations ACK/NACK provenant de l'UE et émet une retransmission dans la basse fréquence.

13. Équipement utilisateur (UE) configuré pour établir une liaison de données entre l'UE et au moins un point de transmission (TP) à haute fréquence dans un réseau sans fil, comprenant :
un premier émetteur-récepteur (1106, 1108, 1104) fonctionnant dans une bande haute fréquence ;
un second émetteur-récepteur (1106, 1108, 1104) fonctionnant dans une bande basse fréquence ; et
un processeur (1110) permettant d'exécuter des instructions comprenant :
la réception d'une attribution provenant d'un gestionnaire de macrocellules dans le réseau sans fil, l'attribution comprenant un ensemble de signaux de référence spécifique à l'UE, qui est mappé vers une pluralité de faisceaux de liaison descendante de TP à haute fréquence, chaque signal de référence spécifique à l'UE identifiant de manière unique un faisceau individuel de liaison descendante de TP à haute fréquence et l'UE ; l'identification de chacun de la pluralité de faisceaux de liaison descendante de TP en détectant les signaux de référence spécifiques à l'UE envoyés dans chaque faisceau de la pluralité de faisceaux de liaison descendante de TP ;
la mesure d'une qualité de chaque faisceau de la pluralité de faisceaux de liaison descendante de TP ;
la sélection d'un faisceau sélectionné parmi un faisceau de la pluralité de faisceaux de liaison descendante de TP en fonction de la qualité ; et
l'établissement de la liaison de données avec le TP à haute fréquence qui a émis le faisceau sélectionné en au moyen du faisceau sélectionné.

14. Point d'émission (TP) à haute fréquence configuré pour établir une liaison de données entre le TP et un équipement d'utilisateur (UE) dans un réseau sans fil, comprenant :
une liaison de communication avec un gestionnaire de macrocellules ;
un émetteur-récepteur (1106, 1108, 1104) permettant de communiquer dans une bande haute fréquence ; et
un processeur (1110) permettant d'exécuter des instructions comprenant :
la réception d'une attribution provenant du gestionnaire de macrocellules, l'attribution comprenant un ensemble de signaux de référence spécifique à l'UE qui est mappé vers une pluralité de faisceaux de liaison descendante de TP à haute fréquence, chaque signal de référence spécifique à l'UE identifiant de manière unique un faisceau individuel de liaison descendante de TP à haute fréquence et l'UE ; et
l'envoi de la pluralité de faisceaux en au moyen de l'émetteur-récepteur ;
la détection d'une demande d'établissement de liaison d'UE pour établir une liaison sur un faisceau de la pluralité de faisceaux ; et
le rapport d'une indication d'établissement de liaison au gestionnaire de macrocellules.

15. Gestionnaire de macrocellules configuré pour établir une liaison de données entre un point d'émission (TP) à haute fréquence désigné et un équipement d'utilisateur (UE) dans un réseau sans fil, comprenant :
un premier émetteur-récepteur (1106, 1108, 1104) fonctionnant dans une bande haute fréquence ;
un second émetteur-récepteur (1106, 1108, 1104) fonctionnant dans une bande basse fréquence ; et
un processeur (1110) permettant d'exécuter des instructions comprenant :
l'envoi d'une indication de disponibilité haute fréquence à l'UE au moyen du second émetteur-récepteur ;
l'envoi d'une attribution au TP, l'attribution comprenant un ensemble de signaux de référence spécifique à l'UE qui correspond à une pluralité de faisceaux de liaison descendante de TP à haute fréquence, chaque signal de référence spécifique à l'UE identifiant de manière unique un faisceau individuel de liaison descendante de TP à haute fréquence et l'UE ;
la réception d'informations de contexte d'UE provenant de l'UE ; et
la réception d'informations ACK/NACK provenant de l'UE pour la transmission par rafales sur la liaison descendante ou provenant du TP pour la transmission par rafales sur la liaison montante.
